# EUROPEAN PATENT APPLICATION

(11) **EP 4 113 349 A1**
(43) Date of publication of application: **04.01.2023**
(21) Application number: 22186441.6
(22) Date of filing: 20.04.2021
(51) Int. Cl.: G06F 30/20, G06F 3/04815, G06F 3/0484, G06F 30/12, G06T 19/20, A41H 3/00, G06F 111/16, G06F 113/12

(54) **GARMENT DESIGN PROCESSES WITH 3D CAD TOOLS**

(30) Priority: 30.04.2020 US 202016863817
(62) Divisional of application: 21169471.6
(71) Applicant: Clothing Tech LLC, Austin, TX 78750 (US)
(72) Inventor: WILCOX, William, Austin, TX 78735 (US)
(74) Representative: Kaminski Harmann

(57) **Abstract**

The invention relates to a computer implemented method, wherein the computer implemented method allows a garment design process to be performed. The garment design process is achieved using CAD tools. A 3D CAD model of a garment (1a) on an avatar is projected (6) in 2D (3b). The projected garment model (5) is then modified by means of seams, edges, embellishments and/or prints. 2D patterns are generated and consequently reassembled to provide a modified 3D CAD model.

## Description

The present invention relates to computer implemented methods for efficiently designing garments.

Garment design is a laborious process. The process as traditionally carried out has distinct stages and requires people with different skill sets. The garment design process typically starts with a garment designer who draws in 2D the proposed garment from different perspectives. The 2D drawings created by the garment designer are taken by a pattern maker who creates 2D patterns that can be sewn together. Once sewn together, the sewn 2D patterns should produce the proposed garment. A sample maker produces a physical garment using the 2D patterns, wherein the produced physical garment may be draped onto a human or a dress form, for example. The garment designer may inspect the draped garment and request additional modifications if the draped garment deviates from the ideal garment as envisioned by the garment designer. Modifications if needed are made to the 2D patterns to improve the potential product. As the changes are made to 2D patterns, it is potentially difficult to determine how the changes will impact the resulting draped garment.

It is therefore an object of the present invention to provide computer implemented methods allowing a simpler garment design process.

It is a further object of the present invention to provide computer implemented methods allowing the laborious work of the pattern maker and the sample maker to be eliminated.

These objects are achieved by realizing at least part of the features of the independent claims. Features which further develop the invention in an alternative or advantageous manner are described in the dependent patent claims.

The invention relates to a first computer implemented method, with program code being stored on a machine readable medium or embodied as an electromagnetic wave, for generating at least one 2D pattern of a garment to be fabricated. The first computer implemented method comprises the following steps: 1) visualizing a relaxed 3D CAD model of a first garment in a virtual 3D environment with a graphical user interface configured to receive user input, wherein the relaxed 3D CAD model is placed on an avatar placed into the virtual 3D environment based on avatar user input provided via the graphical user interface 2) altering the relaxed 3D CAD model by changing at least one parameter parametrizing the relaxed 3D CAD model based on user input provided via the graphical user interface, the alteration providing an altered 3D CAD model 3) generating the at least one 2D pattern so as to conform to at least a part of the altered 3D CAD model 4) providing a modified 3D CAD model by reassembling the generated at least one 2D pattern on the avatar 5) determining an updated relaxed 3D CAD model using the modified 3D CAD model, wherein the updated relaxed 3D CAD model is placed on the avatar, the updated relaxed 3D CAD model representing the garment to be fabricated, and 6) visualizing the updated relaxed 3D CAD model of the garment to be fabricated in the virtual 3D environment.

A 3D CAD model of a first garment is visualized in a relaxed state on an avatar in a virtual 3D environment, wherein the term relaxed refers to a physical state in which the 3D CAD model is in static physical equilibrium. A garment designer using a computer program, said computer program being configured to provide the first computer implemented method, alters the relaxed 3D CAD model of the first garment via the graphical user interface provided by the computer program. Alteration can proceed e.g. by clicking - via the graphical user interface - on a part of the relaxed 3D CAD model of the first garment and by changing the shape of the part through a drag operation. Clicking can for example be carried out using a computer mouse connected to a computing unit executing the computer program, or using a touch screen, or using a touch pen. The click-and-drag operation changes at least one parameter parametrizing the relaxed 3D CAD model of the first garment. Besides click-and-drag, alteration can proceed by clicking on a part of the relaxed 3D CAD model of the first garment, and then by actively changing at least one parameter parametrizing the part of the relaxed 3D CAD model. The alteration provides an altered 3D CAD model.

The computer program providing the first computer implemented method generates at least one 2D pattern conforming to the altered 3D CAD model. The at least one 2D pattern is generated in such a way as to correspond to the altered 3D CAD model once sewn together. According to the invention, the generated at least one 2D pattern is reassembled on the avatar by the computer program. Reassembling takes into account seam information, for example, wherein distinct 2D patterns sharing a seam are reassembled in a neighborly manner, for example. The reassembling may simulate the fabrication process of fabricating a garment given 2D patterns. The reassembling provides a modified 3D CAD model. According to the invention, at least one 2D pattern is generated, wherein the at least one generated 2D pattern corresponds to at least a part of the altered 3D CAD model. For example, only 2D patterns corresponding to the sleeves of the altered 3D CAD model may be generated.

Since the alteration of the relaxed 3D CAD model of the first garment may change the overall shape and mechanical behavior of the first garment and since the modified 3D CAD model is reassembled from the generated at least one 2D pattern which conforms to the altered 3D CAD model, the modified 3D CAD model is typically not in a state of physical equilibrium. If, for example, sleeves of the first garment were lengthened, the lengthened sleeves would exert a greater force on the torso of the first garment via a connecting seam on account of the larger mass of the lengthened sleeve. Starting with the modified 3D CAD model, an updated relaxed 3D CAD model is determined, wherein the updated relaxed 3D CAD model is in static equilibrium, i.e. the unbalanced forces on account of the alteration made to the relaxed 3D CAD model of the first garment are physically propagated through the entire 3D CAD model to reach a rest state, providing the updated relaxed 3D CAD model.

The garment designer may now inspect the updated relaxed 3D CAD model, wherein the updated relaxed 3D CAD model is graphically displayed via the graphical user interface. In case the garment designer is satisfied with the updated relaxed 3D CAD model, the garment designer may stop the design process.

In an embodiment of the first computer implemented method, the at least one parameter to be changed relates to sleeve length, sleeve radius, chest circumference, waist measurement, torso length or neck opening of the first garment. It is understood that the at least one parameter to be changed may also relate to other geometric properties of the relaxed 3D CAD model. The above list mainly possesses exemplary character.

The invention also relates to a second computer implemented method, with program code being stored on a machine readable medium or embodied as an electromagnetic wave, for generating at least one 2D pattern of a garment to be fabricated. The second computer implemented method comprises the following steps: 1) visualizing a relaxed 3D CAD model of a first garment in a virtual 3D environment with a graphical user interface configured to receive user input, wherein the relaxed 3D CAD model is placed on an avatar placed into the virtual 3D environment based on avatar user input provided via the graphical user interface 2) defining a position and orientation of a 2D plane in the virtual 3D environment relative to the relaxed 3D CAD model based on user input provided via the graphical user interface 3) projecting the relaxed 3D CAD model onto the 2D plane, thereby obtaining a projected garment model 4) altering the projected garment model by changing at least one seam and/or at least one edge of the first garment in the projected garment model and/or by adding at least one seam and/or at least one edge of the first garment in the projected garment model and/or by removing at least one seam in the projected garment model, wherein the alteration is based on user input provided via the graphical user interface, the alteration providing a geometrically altered projected garment model 5) back projecting the geometrically altered projected garment model onto the relaxed 3D CAD model, the back projection providing an altered 3D CAD model 6) generating the at least one 2D pattern based on the altered 3D CAD model, wherein the generated at least one 2D pattern conforms to at least a part of the altered 3D CAD model 7) providing a modified 3D CAD model by reassembling the generated at least one 2D pattern on the avatar 8) determining an updated relaxed 3D CAD model using the modified 3D CAD model, wherein the updated relaxed 3D CAD model is placed on the avatar, the updated relaxed 3D CAD model representing the garment to be fabricated, and 9) visualizing the updated relaxed 3D CAD model of the garment to be fabricated in the virtual 3D environment.

A 3D CAD model of a first garment is visualized in a relaxed state on an avatar in a virtual 3D environment, wherein the term relaxed refers to a physical state in which the 3D CAD model is in static physical equilibrium. A garment designer using a computer program, said computer program being configured to provide the second computer implemented method, alters the first garment via the graphical user interface provided by the computer program. The garment designer (user) defines the position and orientation of a 2D plane in the virtual 3D environment relative to the relaxed 3D CAD model. The computer program projects the relaxed 3D CAD model onto the 2D plane defined by the user, thereby obtaining a projected garment model. By changing the placement of the 2D plane, the garment designer is able to view the relaxed 3D CAD model from different points of view. The 2D plane may be visualized in the virtual 3D environment in which the relaxed 3D CAD model is displayed. The projected garment model may be visually displayed to the garment designer who then alters the projected garment model.

According to the invention, the projected garment model is altered by changing at least one seam and/or at least one edge of the first garment in the projected garment model and/or by adding at least one seam and/or at least one edge of the first garment in the projected garment model and/or by removing at least one seam in the projected garment model. Alteration can proceed e.g. by clicking - via the graphical user interface - on a seam visible in the projected garment model and by changing the shape of the seam through a drag operation. Clicking can for example be carried out using a computer mouse connected to a computing unit executing the computer program, or using a touch screen or a touch pen. The garment designer may also draw a new seam onto the projected garment model using the graphical user interface. An existing seam may also be removed based on user instruction provided via the graphical user interface. The alteration provides a geometrically altered projected garment model.

The computer program projects the geometrically altered projected garment model back onto the relaxed 3D CAD model. The projecting back may be automatically carried out once e.g. a seam alteration has been carried out, or the projecting back may alternatively be carried out based on a command provided to the computer program via the graphical user interface. As a result of the back projecting, an altered 3D CAD model is obtained.

The computer program providing the second computer implemented method generates at least one 2D pattern conforming to the altered 3D CAD model. The at least one 2D pattern is generated in such a way as to correspond to the altered 3D CAD model once sewn together. According to the invention, the generated at least one 2D pattern is reassembled on the avatar by the computer program. Reassembling takes into account seam information, for example, wherein distinct 2D patterns sharing a seam are reassembled in a neighborly manner, for example. The reassembling may simulate the fabrication process of fabricating a garment given 2D patterns. The reassembling provides a modified 3D CAD model. According to the invention, at least one 2D pattern is generated, wherein the at least one generated 2D pattern corresponds to at least a part of the altered 3D CAD model. For example, only 2D patterns corresponding to the sleeves of the altered 3D CAD model may be generated.

The alteration of the relaxed 3D CAD model of the first garment may change the overall shape and mechanical behavior of the first garment. The changed position of a seam between a sleeve and a torso of a t-shirt, for example, may change the forces acting between sleeve and torso. Starting with the modified 3D CAD model, an updated relaxed 3D CAD model is determined, wherein the updated 3D CAD model is in static equilibrium, i.e. the alterations made to the relaxed 3D CAD model of the first garment are physically propagated through the entire 3D CAD model to reach a rest state, the rest state corresponding to the updated relaxed 3D CAD model.

The garment designer may now inspect the updated relaxed 3D CAD model, wherein the updated relaxed 3D CAD model is graphically displayed via the graphical user interface. In case the garment designer is satisfied with the updated relaxed 3D CAD model, the garment designer may stop the design process.

In an embodiment of the second computer implemented method, the changed at least one seam and/or the added at least one seam and/or the removed at least one seam is embodied as a plain seam, French seam, flat or abutted seam, or lapped seam. It is understood that the mentioned seam embodiments are purely exemplary and do not preclude other seam types.

In another embodiment of the second computer implemented method, the changed at least one edge of the first garment and/or added at least one edge of the first garment is embodied as a hem or as a finish.

In a further embodiment of the second computer implemented method, a position of the changed at least one seam and/or at least one edge of the first garment and/or a position of the added at least one seam and/or at least one edge of the first garment is described by a Bezier curve or by a polyline, wherein at least one control point of the Bezier curve is based on control point user input provided via the graphical user interface. It is understood that the Bezier curve and the polyline are purely exemplary and do not preclude other line descriptions.

A Bezier curve may be easily modified via a graphical user interface by changing the position of control points determining the shape of the Bezier curve. A user of the computer program providing the second computer implemented method may therefore easily change and/or add a seam and/or a garment edge by adding and/or removing control points of Bezier curves, for example.

The invention further relates to a third computer implemented method, with program code being stored on a machine readable medium or embodied as an electromagnetic wave, for generating at least one 2D pattern of a garment to be fabricated. The third computer implemented method comprises the following steps: 1) visualizing a relaxed 3D CAD model of a first garment in a virtual 3D environment with a graphical user interface configured to receive user input, wherein the relaxed 3D CAD model is placed on an avatar placed into the virtual 3D environment based on avatar user input provided via the graphical user interface 2) defining a position and orientation of a 2D plane in the virtual 3D environment relative to the relaxed 3D CAD model based on user input provided via the graphical user interface 3) projecting the relaxed 3D CAD model onto the 2D plane, thereby obtaining a projected garment model 4) altering the projected garment model by adding at least one print and/or at least one embellishment onto at least a part of the projected garment model, wherein the adding of the at least one print and/or at least one embellishment is based on user input, the alteration providing an additively altered projected garment model 5) back projecting the additively altered projected garment model onto the relaxed 3D CAD model, the back projection providing an altered 3D CAD model 6) generating the at least one 2D pattern based on the altered 3D CAD model, wherein the generated at least one 2D pattern conforms to at least a part of the altered 3D CAD model 7) providing a modified 3D CAD model by reassembling the generated at least one 2D pattern on the avatar 8) determining an updated relaxed 3D CAD model using the modified 3D CAD model, wherein the updated relaxed 3D CAD model is placed on the avatar, the updated relaxed 3D CAD model representing the garment to be fabricated, and 9) visualizing the updated relaxed 3D CAD model of the garment to be fabricated in the virtual 3D environment.

A 3D CAD model of a first garment is visualized in a relaxed state on an avatar in a virtual 3D environment, wherein the term relaxed refers to a physical state in which the 3D CAD model is in static physical equilibrium. A garment designer using a computer program, said computer program being configured to provide the third computer implemented method, alters the first garment via the graphical user interface provided by the computer program. The garment designer (user) defines the position and orientation of a 2D plane in the virtual 3D environment relative to the relaxed 3D CAD model. The computer program projects the relaxed 3D CAD model onto the 2D plane defined by the user, thereby obtaining a projected garment model. By changing the placement of the 2D plane, the garment designer is able to view the relaxed 3D CAD model from different points of view. The 2D plane may be visualized in the virtual 3D environment in which the relaxed 3D CAD model is displayed. The projected garment model may be visually displayed to the garment designer who then alters the projected garment model.

According to the invention, the projected garment model is altered by adding at least one print and/or at least one embellishment onto at least a part of the projected garment model. A print may for example be added to sleeves of a t-shirt, for example. Alteration can proceed e.g. by selecting through clicking - via the graphical user interface - the part of the projected garment model and by adding the desired pattern and/or embroidery to the selected part. Clicking can for example be carried out using a computer mouse connected to a computing unit executing the computer program, or using a touch screen or a touch pen. The garment designer may also draw a print and/or embroidery onto the projected garment model using the graphical user interface. The alteration provides an additively altered projected garment model.

The computer program projects the additively altered projected garment model back onto the relaxed 3D CAD model. The projecting back may be automatically carried out once a print and/or embellishment alteration has been carried out, or the projecting back may alternatively be carried out based on a command provided to the computer program via the graphical user interface. As a result of the back projecting, an altered 3D CAD model is obtained.

The computer program providing the third computer implemented method generates at least one 2D pattern conforming to the altered 3D CAD model. The at least one 2D pattern is generated in such a way as to correspond to the altered 3D CAD model once sewn together. According to the invention, the generated at least one 2D pattern is reassembled on the avatar by the computer program. Reassembling takes into account seam information, for example, wherein distinct 2D patterns sharing a seam are reassembled in a neighborly manner, for example. The reassembling may simulate the fabrication process of fabricating a garment given 2D patterns. The reassembling provides a modified 3D CAD model. According to the invention, at least one 2D pattern is generated, wherein the at least one generated 2D pattern corresponds to at least a part of the altered 3D CAD model. For example, only 2D patterns corresponding to the sleeves of the altered 3D CAD model may be generated.

The alteration of the relaxed 3D CAD model of the first garment may change the overall shape and mechanical behavior of the first garment. An added print and/or embroidery may change the mechanical behavior of a fabric, for example by making the fabric stiffer. Changed mechanical properties of fabrics may influence the overall shape of the proposed garment. Starting with the modified 3D CAD model, an updated relaxed 3D CAD model is determined, wherein the updated relaxed 3D CAD model is in static equilibrium, i.e. the alterations made to the relaxed 3D CAD model of the first garment are physically propagated through the entire 3D CAD model to reach a rest state, the rest state corresponding to the updated relaxed 3D CAD model.

The garment designer may now inspect the updated relaxed 3D CAD model, wherein the updated relaxed 3D CAD model is graphically displayed via the graphical user interface. In case the garment designer is satisfied with the updated 3D CAD model, the garment designer may stop the design process.

In an embodiment of one of the first, second or third computer implemented method, the following steps are carried out: 1) selecting the at least a part of the altered 3D CAD model based on selection user input provided via the graphical user interface, the selection user input comprising selection information relating to the altered 3D CAD model 2) the generating of the at least one 2D pattern provides only those 2D patterns relating to the at least a part of the altered 3D CAD model determined based on the selection user input.

The part of the altered 3D CAD model for which 2D patterns are determined may be determined through user input, for example by delineating the part by drawing lines around the desired part of the altered 3D CAD model using the graphical user interface.

In a further embodiment of one of the first, second or third computer implemented method, the determination of the updated relaxed 3D CAD model is at least based on 1) the modified 3D CAD model 2) the avatar 3) fabric information about at least one mechanical property of at least one fabric of the first garment, and 4) gravity, wherein the direction in which gravity acts is provided to the 3D virtual environment via gravity user input provided via the graphical user interface.

A set of equations describing the mechanics of garments is solved, wherein the modified 3D CAD model is an initial state for the set of equations, the solving providing a mechanical evolution and a rest state 3D CAD model at the end of the mechanical evolution, the rest state 3D CAD model characterized in that all physical forces acting on the rest state 3D CAD model are in static equilibrium, the rest state 3D CAD model being the updated relaxed 3D CAD model. The set of equations takes into account at least the fabric information, gravity and geometrical constraints imposed by the avatar on the mechanically evolving modified 3D CAD model and contact forces between the mechanically evolving modified 3D CAD model and the avatar.

The alteration of the relaxed 3D CAD model of the first garment may change the structure and size of the forces acting on the 3D CAD model. The modified 3D CAD model may for example be provided to a simulation engine specialized for simulating garments. Computer program(s) providing the first, second or third computer implemented method may call the simulation engine, or the simulation engine may be a part of the computer program(s). Starting with at least the modified 3D CAD model and information about the mechanical behavior of fabrics used for the garment and/or seam types/positions and information about the avatar and gravity, the simulation engine may simulate the mechanical evolution of the modified 3D CAD model until a rest state is found in which all forces acting on the (then found) updated relaxed 3D CAD model are in static equilibrium.

In a further embodiment of one of the first, second or third computer implemented method, the set of equations is provided by a finite element method acting on the modified 3D CAD model, the finite element method taking into account at least the fabric information, gravity and the avatar.

In a further embodiment of one of the first, second or third computer implemented method, the avatar is embodied as a mannequin.

The garment designer may desire to view a proposed garment directly on an avatar which is similar to an eventual buyer of the fabricated proposed garment. A human-shape avatar (mannequin) may be displayed in the virtual 3D environment, wherein the shape and size of the human-shape avatar may be chosen by the garment designer via the graphical user interface. The relaxed 3D CAD model and the updated relaxed 3D CAD model are placed on the avatar, wherein placement may for example occur by draping the virtual garment around the avatar.

In an embodiment of one of the second or third computer implemented method, the projecting of the relaxed 3D CAD model onto the 2D plane is carried out using a parallel projection, wherein the direction to which the projection is parallel is determined based on projection direction user input provided via the graphical user interface, or the projecting is carried out using a central projection, wherein a center of projection is determined based on projection center user input provided via the graphical user interface, wherein for parallel projection each point of the 2D plane is associated to a parallel projection line and for central projection each point of the 2D plane is associated to a central projection line.

Projecting may be embodied as parallel projection or central projection. In the former case, the projection direction may need to be provided by the garment designer, while in the latter case, the garment designer may additionally specify a center of projection in the virtual 3D environment via the graphical user interface. The computer program(s) providing the second computer implemented method or the third computer implemented method may also propose a 2D plane to the garment designer in case the garment designer clicks on a part of the relaxed 3D CAD model, for example. The proposed 2D plane may be automatically determined in such a way as to provide an optimal viewing of the part of the relaxed 3D CAD model on which the garment designer clicked. The computer program(s) may also allow for zooming in the 2D plane, wherein based on user input parts of the projected garment model are enlarged, while other parts of the projected garment model are not shown any more.

In a further embodiment of one of the second or third computer implemented method, the projecting comprises using for a point of the 2D plane the associated parallel projection line and/or the associated central projection line, and mapping a first point of the relaxed 3D CAD model intersecting the associated parallel projection line and/or the associated central projection line onto the point of the 2D plane, wherein the first point is determined looking along the associated parallel projection line and/or central projection line towards the 2D plane.

In a further embodiment of one of the second or third computer implemented method, the back projecting is an inverse operation to the projecting, the back projecting comprising using for a point of the 2D plane the associated parallel projection line and/or the associated central projection line, and mapping the point onto a last point of the relaxed 3D CAD model intersecting the associated parallel projection line and/or the associated central projection line, wherein the last point is determined looking along the associated parallel projection line and/or central projection line away from the 2D plane.

In an embodiment of the third computer implemented method, the at least one embellishment comprises distressing at least one fabric and/or adding embroidery. It is understood that distressing and adding embroidery are only illustrative examples and do not preclude other types of embellishments. The garment designer may for example also doodle a drawing on the projected garment model.

In a further embodiment of the third computer implemented method, the added at least one print and/or at least one embellishment is taken into account by the set of equations, wherein the additive alterations change the mechanical behavior of at least the part of the altered 3D CAD model corresponding to the additively altered at least a part of the projected garment model.

In a further embodiment of one of the first, second or third computer implemented method, the reassembling comprises resewing functionality.

In a further embodiment of one of the first, second or third computer implemented method, the altering of the first garment and the generating of the at least one 2D pattern is carried out simultaneously.

The 2D patterns may be generated in parallel to the alterations done to the relaxed 3D CAD model of the first garment. Once a parameter of the relaxed 3D CAD model is changed, for example, 2D patterns may be generated in parallel which correspond to the altered 3D CAD model.

The inventive system is described below in more detail purely by way of example with the aid of concrete exemplary embodiments illustrated schematically in the drawings, further advantages of the invention also being examined. Identical elements are labelled with the same reference numerals in the figures. In detail:
- Figure 1: shows a schematic and illustrative depiction of a t-shirt with short sleeves and corresponding 2D patterns;
- Figure 2: shows a schematic and illustrative depiction of a t-shirt with longer sleeves and corresponding 2D patterns;
- Figure 3: shows a schematic and illustrative depiction of a t-shirt with short sleeves and a projection of the t-shirt onto a 2D projection plane;
- Figure 4: shows a schematic and illustrative depiction of a human avatar dressed with a t-shirt;
- Figure 5: shows a schematic and illustrative depiction of a t-shirt with short sleeves with added patterns;
- Figure 6: shows a schematic and illustrative depiction of a computing unit and a display providing a graphical user interface;
- Figure 7: shows a schematic and illustrative depiction of the prior art garment design process; and
- Figure 8: shows a schematic and illustrative depiction of a selective generation of 2D patterns.

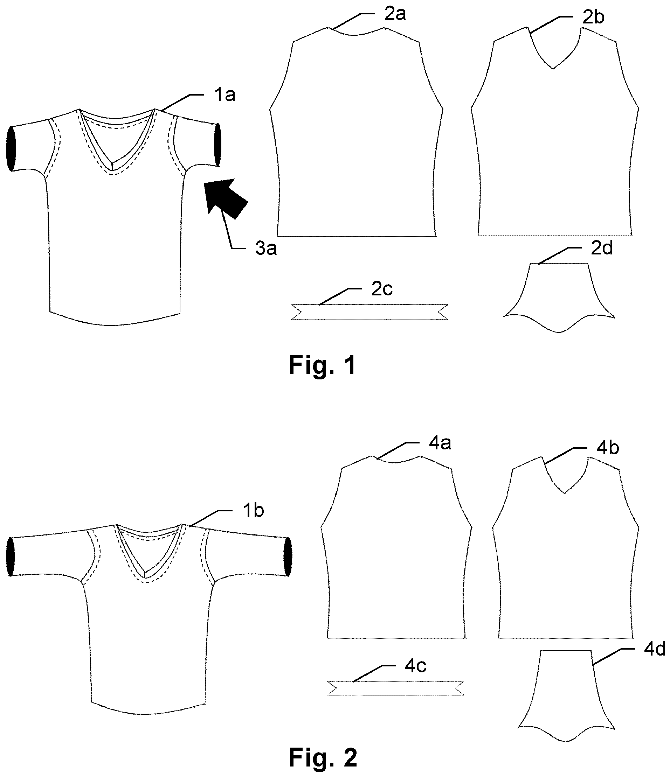

**Figure 1** shows a schematic and illustrative depiction of a t-shirt 1a with short sleeves and corresponding 2D patterns 2a,2b,2c,2d. The t-shirt 1a with short sleeves and the corresponding 2D patterns 2a,2b,2c,2d are displayed in a virtual 3D environment provided by e.g. a computing unit and an associated display. The t-shirt 1a with short sleeves is in a rest state, i.e. all physical forces acting on the t-shirt 1a with short sleeves are in static equilibrium. An exemplary physical force acting on the t-shirt 1a with short sleeves is gravity, wherein the direction in which gravity acts in the virtual 3D environment may be provided by a user to a computer program stored on the computing unit and providing the virtual 3D environment. The user of the computer program is able to interact with the t-shirt 1a with short sleeves via the graphical user interface. The user may decide to lengthen a sleeve of the t-shirt 1a with short sleeves. Via the graphical user interface, the user may provide an instruction 3a to the computer program to lengthen the sleeve.

**Figure 2** shows a t-shirt 1b with long sleeves in a rest state obtaining by altering the t-shirt 1a with short sleeves. The garment design process, in Figures 1 and 2 embodied as a t-shirt design process, proceeds directly in the virtual 3D environment. A designer alters a short-sleeve t-shirt 1a directly in the virtual 3D environment, for example by issuing a command 3a to lengthen the sleeves by a certain amount. Besides sleeve length alterations, any other alterations may be carried out by the designer, alterations for example relating to sleeve radius, chest circumference, waist measurement, torso length, neck opening etc. Alterations may be directly done in the virtual 3D environment, providing an altered t-shirt. The computer program generates 2D patterns 4a,4b,4c,4d corresponding to the altered t-shirt. The 2D patterns 4a,4b,4c,4d are then reassembled in 3D by the computer program, the reassembling providing a modified t-shirt. The modified t-shirt is typically not in static equilibrium. After lengthening a sleeve, for example, the additional mass of each longer sleeve exerts a force on the respective seam between the torso of the modified t-shirt and each longer sleeve. The computer program providing the virtual 3D environment comprises garment simulation routines which - upon receiving the modified t-shirt as input, for example - solve a set of mechanical equations describing garment physics with the modified t-shirt as initial input until an updated t-shirt 1b with long sleeves in rest state is determined, all physical forces acting on the updated t-shirt 1b with long sleeves being in static equilibrium. The 2D patterns 4a,4b,4c,4d allow the updated t-shirt 1b with long sleeves to be fabricated.

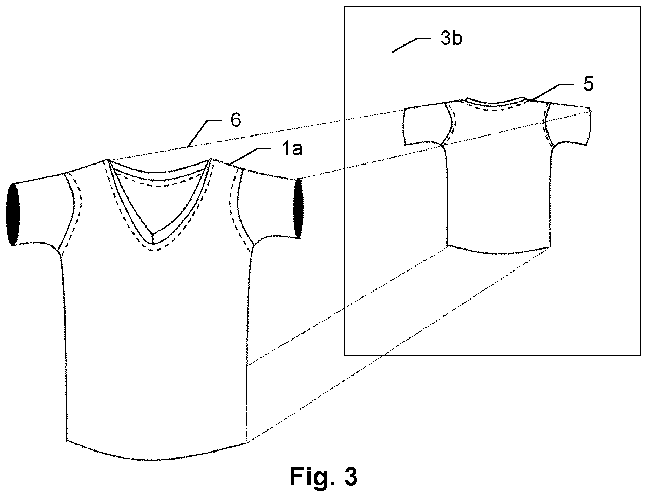

**Figure 3** shows a schematic and illustrative depiction of a t-shirt 1a with short sleeves and a projection 6 of the t-shirt 1a onto a 2D projection plane 3b chosen by a user of the computer program providing the virtual 3D environment. In Figure 3, the 2D projection plane 3b is placed behind the t-shirt 1a with short sleeves. Projecting may be embodied as a central projection or as a parallel projection, for example. The projected t-shirt 5 corresponds to a view of the t-shirt 1a with short sleeves from the back. By placing the 2D projection plane 3b at different positions and orientations with respect to the t-shirt 1a with short sleeves, a garment designer is able to obtain different projections of the t-shirt 1a with short sleeves. The garment designer is able to directly interact with the projected t-shirt 5 by e.g. changing a seam and/or removing a seam and/or adding a seam to the projected t-shirt 5. The accordingly altered projected t-shirt 5 is projected back on the t-shirt 1a with short sleeves, wherein the projecting back is done along the same rays as used for the projecting 6 in the opposite direction, providing an altered t-shirt with short sleeves.

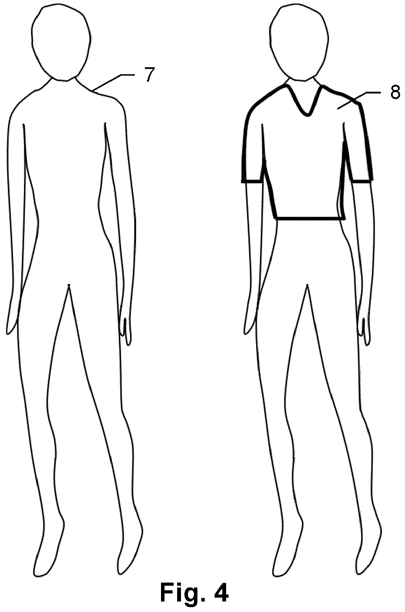

**Figure 4** shows a schematic and illustrative depiction of a human avatar 7 dressed with a t-shirt 8. The avatar 7 as shown in Figure 4 is virtual, i.e. both the avatar 7 and the avatar 7 dressed with the t-shirt 8 are provided in the virtual 3D environment. The avatar 7 and the dressing of the avatar may be incorporated into a garment design process, wherein parts of the design process are for example embodied in Figures 1 and 2. A t-shirt in rest state is placed on the avatar 7. Subsequently it is altered by the garment designer, the alteration providing an altered t-shirt. 2D patterns corresponding to the altered t-shirt are then generated and reassembled, the reassembling providing a modified t-shirt. The modified t-shirt, being placed on the avatar 7, is provided to a garment simulation routine. The garment simulation routine takes into account geometric constraints imposed by the avatar 7 on the shape of the t-shirt as well as forces, for example friction forces, between the t-shirt and the avatar 7 for determination of a t-shirt 8 at rest using at least the modified t-shirt as input.

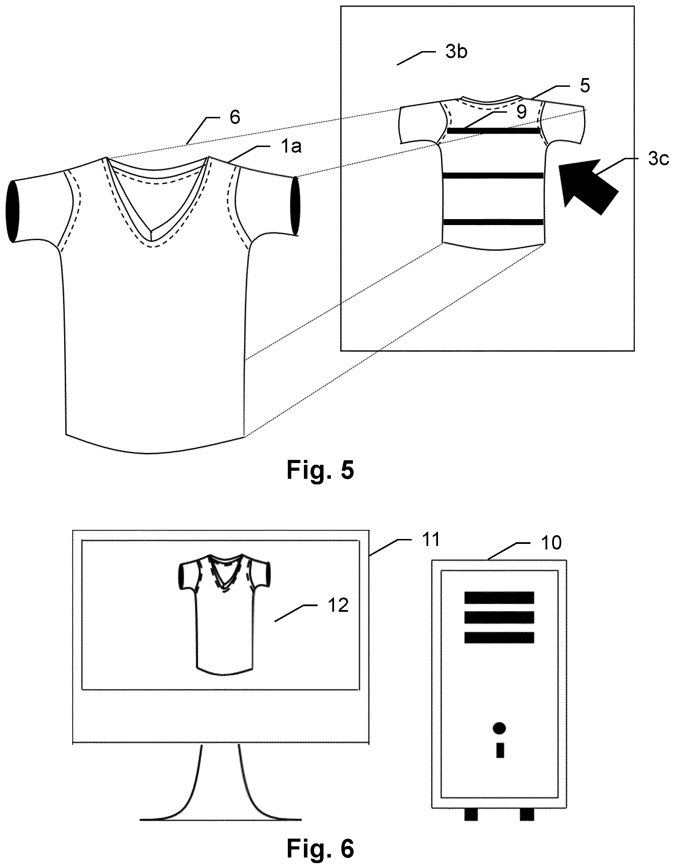

**Figure 5** shows a schematic and illustrative depiction of a t-shirt 1a with short sleeves and a projection 6 of the t-shirt 1a onto a 2D projection plane 3b chosen by a user of the computer program providing the virtual 3D environment. In Figure 3, the 2D projection plane 3b is placed behind the t-shirt 1a with short sleeves. Projecting may be embodied as a central projection or as a parallel projection, for example. The projected t-shirt 5 corresponds to a view of the t-shirt 1a with short sleeves from the back. An additive pattern 9 is added to the projected t-shirt 5 with short sleeves based on user input 3c provided via the graphical user interface. Besides added patterns, embellishments such as embroidery can be added to a garment as well based on user input. After adding prints 9 and/or embellishments onto the projected t-shirt 5, a back projecting as in Figure 3 translates these changes into changes of the t-shirt 1a itself. The added prints and/or embroidery may change the mechanical behavior of the fabric constituting the altered t-shirt.

**Figure 6** shows a schematic and illustrative depiction of a computing unit 10 and a display 11 providing the graphical user interface 12. The computer program providing the virtual 3D environment and the garment simulation routine may be stored on the computing unit. The graphical user interface 12 via which a garment designer may design a garment uses the display 11 associated to the computing unit 10.

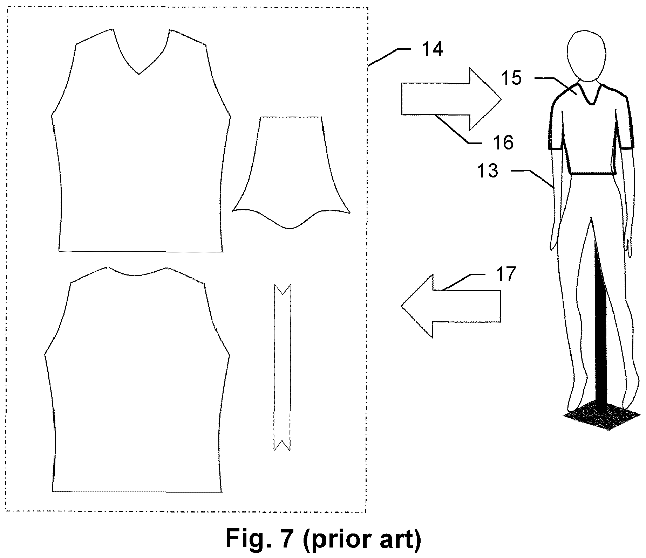

**Figure 7** shows a schematic and illustrative depiction of the prior art garment design process. A garment designer draws in 2D different perspectives of a proposed garment. A pattern maker creates 2D patterns 14 which can be sewn together to create the proposed garment. A sample maker then produces a physical garment which can be placed 16 onto a physical avatar 13, for example. If the garment designer is not satisfied with the look of the physical garment 15 on the physical avatar 13, modifications 17 to the 2D patterns 14 are made. The entire process is iterative in nature and laborious.

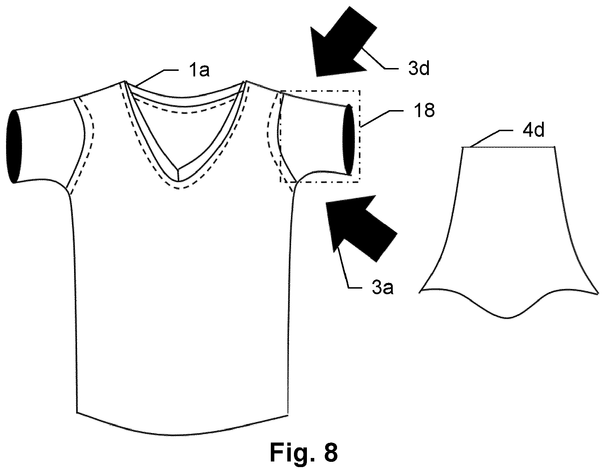

**Figure 8** shows a schematic and illustrative depiction of a selective generation of 2D patterns. The garment designer provides an instruction 3a via the graphical user interface to the computer program to lengthen the sleeves of a t-shirt 1a with short sleeves, for example. The lengthening provides an altered t-shirt. The garment designer may provide a further instruction 3d via the graphical user interface, wherein the further instruction 3d creates a selection region 18 in the virtual 3D environment. The 2D pattern generation carried out based on the altered t-shirt obtained after lengthening the sleeves only generates those 2D patterns 4d which correspond to parts of the altered t-shirt in the created selection region 18. The selection region may be created both before and after alteration of the t-shirt.

Although the invention is illustrated above, partly with reference to some preferred embodiments, it must be understood that numerous modifications and combinations of different features of the embodiments can be made. All these modifications lie within the scope of the appended claims.

The following list of numbered items are embodiments comprised by the present invention:
1. Computer implemented method, with program code being stored on a machine readable medium or embodied as an electromagnetic wave, for generating at least one 2D pattern of a garment to be fabricated, the computer implemented method comprising
   - visualizing a relaxed 3D CAD model of a first garment in a virtual 3D environment with a graphical user interface configured to receive user input, wherein the relaxed 3D CAD model is placed on an avatar placed into the virtual 3D environment based on avatar user input provided via the graphical user interface,
   - altering the relaxed 3D CAD model by changing at least one parameter parametrizing the relaxed 3D CAD model based on user input provided via the graphical user interface, the alteration providing an altered 3D CAD model,
   - generating the at least one 2D pattern so as to conform to at least a part of the altered 3D CAD model,
   - providing a modified 3D CAD model by reassembling the generated at least one 2D pattern on the avatar,
   - determining an updated relaxed 3D CAD model using the modified 3D CAD model, wherein the updated relaxed 3D CAD model is placed on the avatar, the updated relaxed 3D CAD model representing the garment to be fabricated, and
   - visualizing the updated relaxed 3D CAD model of the garment to be fabricated in the virtual 3D environment.
2. Computer implemented method according to item 1, wherein the at least one parameter to be changed relates to sleeve length, sleeve radius, chest circumference, waist measurement, torso length or neck opening of the first garment.
3. Computer implemented method, with program code being stored on a machine readable medium or embodied as an electromagnetic wave, for generating at least one 2D pattern of a garment to be fabricated, the computer implemented method comprising
   - visualizing a relaxed 3D CAD model of a first garment in a virtual 3D environment with a graphical user interface configured to receive user input, wherein the relaxed 3D CAD model is placed on an avatar placed into the virtual 3D environment based on avatar user input provided via the graphical user interface,
   - defining a position and orientation of a 2D plane in the virtual 3D environment relative to the relaxed 3D CAD model based on user input provided via the graphical user interface,
   - projecting the relaxed 3D CAD model onto the 2D plane, thereby obtaining a projected garment model,
   - altering the projected garment model by changing at least one seam and/or at least one edge of the first garment in the projected garment model and/or by adding at least one seam and/or at least one edge of the first garment in the projected garment model and/or by removing at least one seam in the projected garment model, wherein the alteration is based on user input provided via the graphical user interface, the alteration providing a geometrically altered projected garment model,
   - back projecting the geometrically altered projected garment model onto the relaxed 3D CAD model, the back projection providing an altered 3D CAD model,
   - generating the at least one 2D pattern based on the altered 3D CAD model, wherein the generated at least one 2D pattern conforms to at least a part of the altered 3D CAD model,
   - providing a modified 3D CAD model by reassembling the generated at least one 2D pattern on the avatar,
   - determining an updated relaxed 3D CAD model using the modified 3D CAD model, wherein the updated relaxed 3D CAD model is placed on the avatar, the updated relaxed 3D CAD model representing the garment to be fabricated, and
   - visualizing the updated relaxed 3D CAD model of the garment to be fabricated in the virtual 3D environment.
4. Computer implemented method according to item 3, wherein the changed at least one seam and/or the added at least one seam and/or the removed at least one seam is embodied as a plain seam, French seam, flat or abutted seam, or lapped seam.
5. Computer implemented method according to item 3, wherein the changed at least one edge of the first garment and/or added at least one edge of the first garment is embodied as a hem or as a finish.
6. Computer implemented method according to item 3, wherein a position of the changed at least one seam and/or at least one edge of the first garment and/or a position of the added at least one seam and/or at least one edge of the first garment is described by a Bezier curve or by a polyline, wherein at least one control point of the Bezier curve is based on control point user input provided via the graphical user interface.
7. Computer implemented method, with program code being stored on a machine readable medium or embodied as an electromagnetic wave, for generating at least one 2D pattern of a garment to be fabricated, the computer implemented method comprising
   - visualizing a relaxed 3D CAD model of a first garment in a virtual 3D environment with a graphical user interface configured to receive user input, wherein the relaxed 3D CAD model is placed on an avatar placed into the virtual 3D environment based on avatar user input provided via the graphical user interface,
   - defining a position and orientation of a 2D plane in the virtual 3D environment relative to the relaxed 3D CAD model based on user input provided via the graphical user interface,
   - projecting the relaxed 3D CAD model onto the 2D plane, thereby obtaining a projected garment model,
   - altering the projected garment model by adding at least one print and/or at least one embellishment onto at least a part of the projected garment model, wherein the adding of the at least one print and/or at least one embellishment is based on user input, the alteration providing an additively altered projected garment model,
   - back projecting the additively altered projected garment model onto the relaxed 3D CAD model, the back projection providing an altered 3D CAD model,
   - generating the at least one 2D pattern based on the altered 3D CAD model, wherein the generated at least one 2D pattern conforms to at least a part of the altered 3D CAD model,
   - providing a modified 3D CAD model by reassembling the generated at least one 2D pattern on the avatar,
   - determining an updated relaxed 3D CAD model using the modified 3D CAD model, wherein the updated relaxed 3D CAD model is placed on the avatar, the updated relaxed 3D CAD model representing the garment to be fabricated, and
   - visualizing the updated relaxed 3D CAD model of the garment to be fabricated in the virtual 3D environment.
8. Computer implemented method according to one of items 1, 3, or 7, comprising
   - selecting the at least a part of the altered 3D CAD model based on selection user input provided via the graphical user interface, the selection user input comprising selection information relating to the altered 3D CAD model,
   - the generating of the at least one 2D pattern provides only those 2D patterns relating to the at least a part of the altered 3D CAD model determined based on the selection user input.
9. Computer implemented method according to one of items 1, 3, or 7, wherein the determination of the updated relaxed 3D CAD model is at least based on
   - the modified 3D CAD model,
   - the avatar,
   - fabric information about at least one mechanical property of at least one fabric of the first garment, and
   - gravity, wherein the direction in which gravity acts is provided to the 3D virtual environment via gravity user input provided via the graphical user interface,

   and solving a set of equations describing the mechanics of garments, wherein the modified 3D CAD model is an initial state for the set of equations, the solving providing a mechanical evolution and a rest state 3D CAD model at the end of the mechanical evolution, the rest state 3D CAD model characterized in that all physical forces acting on the rest state 3D CAD model are in static equilibrium, the rest state 3D CAD model being the updated relaxed 3D CAD model, wherein the set of equations takes into account at least the fabric information, gravity and geometrical constraints imposed by the avatar on the mechanically evolving modified 3D CAD model and contact forces between the mechanically evolving modified 3D CAD model and the avatar,
   in particular wherein the set of equations is provided by a finite element method acting on the modified 3D CAD model, the finite element method taking into account at least the fabric information, gravity and the avatar.
10. Computer implemented method according to one of items 1, 3 or 7, wherein the avatar is embodied as a mannequin.
11. Computer implemented method according to one of items 3 or 7, wherein the projecting of the relaxed 3D CAD model onto the 2D plane is carried out using a parallel projection, wherein the direction to which the projection is parallel is determined based on projection direction user input provided via the graphical user interface, or the projecting is carried out using a central projection, wherein a center of projection is determined based on projection center user input provided via the graphical user interface, wherein for parallel projection each point of the 2D plane is associated to a parallel projection line and for central projection each point of the 2D plane is associated to a central projection line.
12. Computer implemented method according to item 12, wherein the projecting comprises
   - using for a point of the 2D plane the associated parallel projection line and/or the associated central projection line, and mapping a first point of the relaxed 3D CAD model intersecting the associated parallel projection line and/or the associated central projection line onto the point of the 2D plane, wherein the first point is determined looking along the associated parallel projection line and/or central projection line towards the 2D plane.
13. Computer implemented method according to item 12, wherein the back projecting is an inverse operation to the projecting, the back projecting comprising
   - using for a point of the 2D plane the associated parallel projection line and/or the associated central projection line, and mapping the point onto a last point of the relaxed 3D CAD model intersecting the associated parallel projection line and/or the associated central projection line, wherein the last point is determined looking along the associated parallel projection line and/or central projection line away from the 2D plane.
14. Computer implemented method according to item 7,
   wherein the at least one embellishment comprises distressing at least one fabric and/or adding embroidery, or
   wherein the added at least one print and/or at least one embellishment is taken into account by the set of equations, wherein the additive alterations change the mechanical behavior of at least the part of the altered 3D CAD model corresponding to the additively altered at least a part of the projected garment model.
15. Computer implemented method according to one of items 1, 3 or 7, wherein the reassembling comprises resewing functionality, or
   wherein the altering of the first garment and the generating of the at least one 2D pattern is carried out simultaneously.

## Claims

1. Computer implemented method, with program code being stored on a machine readable medium or embodied as an electromagnetic wave, for generating at least one 2D pattern of a garment to be fabricated, the computer implemented method comprising
• visualizing a relaxed 3D CAD model of a first garment in a virtual 3D environment with a graphical user interface configured to receive user input, wherein the relaxed 3D CAD model is placed on an avatar placed into the virtual 3D environment based on avatar user input provided via the graphical user interface,
• defining a position and orientation of a 2D plane in the virtual 3D environment relative to the relaxed 3D CAD model based on user input provided via the graphical user interface,
• projecting the relaxed 3D CAD model onto the 2D plane, thereby obtaining a projected garment model,
• altering the projected garment model by changing at least one seam and/or at least one edge of the first garment in the projected garment model and/or by adding at least one seam and/or at least one edge of the first garment in the projected garment model and/or by removing at least one seam in the projected garment model, wherein the alteration is based on user input provided via the graphical user interface, the alteration providing a geometrically altered projected garment model,
• back projecting the geometrically altered projected garment model onto the relaxed 3D CAD model, the back projection providing an altered 3D CAD model,
• generating the at least one 2D pattern based on the altered 3D CAD model, wherein the generated at least one 2D pattern conforms to at least a part of the altered 3D CAD model,
• providing a modified 3D CAD model by reassembling the generated at least one 2D pattern on the avatar,
• determining an updated relaxed 3D CAD model using the modified 3D CAD model, wherein the updated relaxed 3D CAD model is placed on the avatar, the updated relaxed 3D CAD model representing the garment to be fabricated, and
• visualizing the updated relaxed 3D CAD model of the garment to be fabricated in the virtual 3D environment.

2. Computer implemented method according to claim 1, wherein the changed at least one seam and/or the added at least one seam and/or the removed at least one seam is embodied as a plain seam, French seam, flat or abutted seam, or lapped seam.

3. Computer implemented method according to claim 1, wherein the changed at least one edge of the first garment and/or added at least one edge of the first garment is embodied as a hem or as a finish.

4. Computer implemented method according to claim 1, wherein a position of the changed at least one seam and/or at least one edge of the first garment and/or a position of the added at least one seam and/or at least one edge of the first garment is described by a Bezier curve or by a polyline, wherein at least one control point of the Bezier curve is based on control point user input provided via the graphical user interface.

5. Computer implemented method, with program code being stored on a machine readable medium or embodied as an electromagnetic wave, for generating at least one 2D pattern of a garment to be fabricated, the computer implemented method comprising
• visualizing a relaxed 3D CAD model of a first garment in a virtual 3D environment with a graphical user interface configured to receive user input, wherein the relaxed 3D CAD model is placed on an avatar placed into the virtual 3D environment based on avatar user input provided via the graphical user interface,
• defining a position and orientation of a 2D plane in the virtual 3D environment relative to the relaxed 3D CAD model based on user input provided via the graphical user interface,
• projecting the relaxed 3D CAD model onto the 2D plane, thereby obtaining a projected garment model,
• altering the projected garment model by adding at least one print and/or at least one embellishment onto at least a part of the projected garment model, wherein the adding of the at least one print and/or at least one embellishment is based on user input, the alteration providing an additively altered projected garment model,
• back projecting the additively altered projected garment model onto the relaxed 3D CAD model, the back projection providing an altered 3D CAD model,
• generating the at least one 2D pattern based on the altered 3D CAD model, wherein the generated at least one 2D pattern conforms to at least a part of the altered 3D CAD model,
• providing a modified 3D CAD model by reassembling the generated at least one 2D pattern on the avatar,
• determining an updated relaxed 3D CAD model using the modified 3D CAD model, wherein the updated relaxed 3D CAD model is placed on the avatar, the updated relaxed 3D CAD model representing the garment to be fabricated, and
• visualizing the updated relaxed 3D CAD model of the garment to be fabricated in the virtual 3D environment.

6. Computer implemented method according to one of claims 1 or 5, comprising
• selecting the at least a part of the altered 3D CAD model based on selection user input provided via the graphical user interface, the selection user input comprising selection information relating to the altered 3D CAD model,
• the generating of the at least one 2D pattern provides only those 2D patterns relating to the at least a part of the altered 3D CAD model determined based on the selection user input.

7. Computer implemented method according to one of claims 1 or 5, wherein the determination of the updated relaxed 3D CAD model is at least based on
• the modified 3D CAD model,
• the avatar,
• fabric information about at least one mechanical property of at least one fabric of the first garment, and
• gravity, wherein the direction in which gravity acts is provided to the 3D virtual environment via gravity user input provided via the graphical user interface,
and solving a set of equations describing the mechanics of garments, wherein the modified 3D CAD model is an initial state for the set of equations, the solving providing a mechanical evolution and a rest state 3D CAD model at the end of the mechanical evolution, the rest state 3D CAD model **characterized in that** all physical forces acting on the rest state 3D CAD model are in static equilibrium, the rest state 3D CAD model being the updated relaxed 3D CAD model, wherein the set of equations takes into account at least the fabric information, gravity and geometrical constraints imposed by the avatar on the mechanically evolving modified 3D CAD model and contact forces between the mechanically evolving modified 3D CAD model and the avatar,
in particular wherein the set of equations is provided by a finite element method acting on the modified 3D CAD model, the finite element method taking into account at least the fabric information, gravity and the avatar.

8. Computer implemented method according to one of claims 1 or 5, wherein the avatar is embodied as a mannequin.

9. Computer implemented method according to one of claims 1 or 5, wherein the projecting of the relaxed 3D CAD model onto the 2D plane is carried out using a parallel projection, wherein the direction to which the projection is parallel is determined based on projection direction user input provided via the graphical user interface, or the projecting is carried out using a central projection, wherein a center of projection is determined based on projection center user input provided via the graphical user interface, wherein for parallel projection each point of the 2D plane is associated to a parallel projection line and for central projection each point of the 2D plane is associated to a central projection line.

10. Computer implemented method according to claim 9, wherein the projecting comprises
• using for a point of the 2D plane the associated parallel projection line and/or the associated central projection line, and mapping a first point of the relaxed 3D CAD model intersecting the associated parallel projection line and/or the associated central projection line onto the point of the 2D plane, wherein the first point is determined looking along the associated parallel projection line and/or central projection line towards the 2D plane.

11. Computer implemented method according to claim 9, wherein the back projecting is an inverse operation to the projecting, the back projecting comprising
• using for a point of the 2D plane the associated parallel projection line and/or the associated central projection line, and mapping the point onto a last point of the relaxed 3D CAD model intersecting the associated parallel projection line and/or the associated central projection line, wherein the last point is determined looking along the associated parallel projection line and/or central projection line away from the 2D plane.

12. Computer implemented method according to claim 5,
wherein the at least one embellishment comprises distressing at least one fabric and/or adding embroidery, or
wherein the added at least one print and/or at least one embellishment is taken into account by the set of equations, wherein the additive alterations change the mechanical behavior of at least the part of the altered 3D CAD model corresponding to the additively altered at least a part of the projected garment model.

13. Computer implemented method according to one of claims 1 or 5, wherein the reassembling comprises resewing functionality, or
wherein the altering of the first garment and the generating of the at least one 2D pattern is carried out simultaneously.
